## Europäisches Patentamt
## European Patent Office
## Office européen des brevets

(19)

(11) Veröffentlichungsnummer: **0 303 565**
**A1**

# EUROPÄISCHE PATENTANMELDUNG

(12)

(21) Anmeldenummer: **88810463.5**

(22) Anmeldetag: **06.07.88**

(51) Int. Cl.⁴: **G 05 B 15/02**

(30) Priorität: **15.07.87 CH 2698/87**

(43) Veröffentlichungstag der Anmeldung:
**15.02.89 Patentblatt 89/07**

(84) Benannte Vertragsstaaten:
**CH DE FR GB LI SE**

(71) Anmelder: **CIBA-GEIGY AG**
**Klybeckstrasse 141**
**CH-4002 Basel (CH)**

(72) Erfinder: **Petitjean, Pierre**
**Häglerstrasse 10**
**CH-4422 Arisdorf (CH)**

(54) **Fabrikationsanlage zur Herstellung eines Produktes.**

(57) Bei einer Fabrikationsanlage werden sämtliche Bauteile, die für ein Syntheseverfahren oder Herstellungsverfahren erforderlich sind, hardware- und softwaremäßig in modularen Einheiten (8 bis 12) zusammengefaßt. Dabei werden einerseits örtliche fixe Module (8, 46) und mobile Module (9 bis 12) gebildet, deren Apparate und Instrumente in staplergängigen Gestellen montiert sind. Den Modulen sind Steuermodule (33 bis 37) zugeordnet, die jeweils einen programmierbaren Modulnummern-Code erhalten, mit dem sich jedes Modul (8 bis 12) beim Prozeßleitsystem (1) selbst identifiziert.

EP 0 303 565 A1

**Beschreibung**

### Fabrikationsanlage zur Herstellung eines Produktes

Die Erfindung betrifft eine Fabrikationsanlage zur Herstellung eines Produktes, insbesondere eines chemischen Produktes oder eines Eduktes, mit einem Ein/Ausgabe-Konsolen und Prozeßrechner aufweisenden Prozeßleitsystem, durch das die in den einzelnen Produktionsapparaturen und Geräten der Fabrikationsanlage ablaufenden Prozeßstufen zur Produktion eines Endproduktes aus den eingespeisten Rohstoffen mit Hilfe von Sensoren und Aktuatoren überwachbar und steuerbar sind.

Derartige Anlagen mit Leitsystemen sind bekannt und werden im Rahmen der Bemühungen um eine weitere Rationalisierung in der Produktion eingesetzt. Wenn eine Fabrikationsanlage dazu verwendet werden soll, nicht dauernd das gleiche Produkt herzustellen, sondern aufeinanderfolgend Chargen verschiedener Produkte, ist es erforderlich, die Anlage jeweils umzurüsten, wobei die Umrüstzeiten beim Wechsel der Verfahren zur Erzeugung chemischer Produkte häufig in der Größenordnung von vier bis sechs Wochen liegen. Während dieser Zeit ist die Fabrikationsanlage außer Betrieb, was aus betriebswirtschaftlichen Gründen unerwünscht ist.

Aus der GB-A-2 127 586 sind ein Verfahren und eine Vorrichtung zur elektronischen Regelung eines modularen Systems bekannt, das in seiner Gesamtheit eine Funktionseinheit bildet und deren Funktionsmodule einzeln regelbar sind. Den einzelnen Funktionsmodulen sind jeweils autark arbeitende Regler zugeordnet, die mit einem Leitrechner verbunden sind, der den einzelnen Regelkreisen zur Optimierung des Gesmatsystems je nach dem Betriebs- und Anwendungsfall Sollwerte vorgibt, die vom Leitrechner nach für den jeweiligen Anwendungsfall vorbestimmten Kriterien aus Meßwerten sowie externen Steuersignalen ermittelt werden. Bei einem Ausführungsbeispiel der bekannten Vorrichtung zur Regelung von modularen Systemen bestehen die Funktionsmodule aus einer Kraftmaschine, einem Leistungsumsetzer und einer angetriebenen Maschine für eine Anwendung in einem Kraftwerk. Bei einem anderen Ausführungsbeispiel ist die Funktionseinheit kein Kraftwerk, sondern ein Kraftfahrzeug, dessen erstes Funktionsmodul ein Dieselmotor und dessen zweites Funktionsmodul ein Getriebe ist. Beiden Funktionsmodulen sind autark arbeitende Regler zugeordnet, die vom Leitrechner mit Sollwerten entsprechend den jeweils gegebenen Bedingungen versorgt werden. Da die Regler autark arbeiten, kann bei Reperaturen eine kurze Unterbrechung der Zuruhr neuer Sollwerte in Kauf genommen werden.

Aus einem in Regelungstechnische Praxis 26, (1984) Mai, Heft 5, Seiten 226 bis 231 erschienenen Aufsatz von B.I. Brost mit dem Titel "Prozeßführungssystem TDC 3000" ist es bekannt, Funktionsmodule als Träger systemspezifischer Leistungen über ein lokales Datennetz miteinander zu verbinden. Das Prozeßführungssystem gestattet es, die Prozeßdaten von Produktionseinheiten mit allen der Bedienerführung dienenden kommerziellen Informationen zu verknüpfen, wobei als Anwendungsziel alle verfahrenstechnischen Anlagen eingeschlossen sind. Als spezielle Funktionsmodule sind ein historisches Archiviermodul zum Abspeichern aller Prozeßdaten sowie ein Applikationsmodul vorgesehen, das ein konfigurier- und programmierbarer Funktionsbaustein ist. Alle Prozeßdaten und Informationen können anlagenweit in einer einzigen Bedienkonsole verarbeitet und dargestellt werden. Bei dem Prozeßführungssystem TDC 3000 werden die bisher von einem Großrechner durchgeführten Aufgaben von dezentralen Funktionsmodulen übernommen, auf die zeitintensive Rechenfunktionen verteilt werden.

W. Müller beschreibt unter dem Titel "Procontrol I, ein dezentrales Industrieleitsystem" in Regelungstechnische Praxis 26 (1984) November, Heft 11 eine Systemstruktur für ein digitales und dezentrales Industrieleitsystem, das in erster Linie für den Einsatz in Anlagen der Sparten Chemie, Trinkwasser, Abwasser, Eisen- und Stahlerzeugung, Walzwerke sowie verarbeitende Industrie gedacht ist und alle leittechnischen Funktionen in seinen modular ausgelegten aufeinander abgestimmten Systemkomponenten abdeckt. Mit dem bekannten dezentralen Industrieleitsystem lassen sich hierarchisch gestufte, räumlich verteilte Leitanlagen aufbauen, bei denen an zentraler Stelle und während des Betriebs die Konfigurationsdaten vorgegeben und zurückgelesen werden können.

Der Erfindung liegt die Aufgabe zugrunde, eine Fabrikationsanlage zu schaffen, die eine hohe Verfahrensflexibilität bei kurzen Umrüstzeiten und eine hohe Zuverlässigkeit gestattet.

Diese Aufgabe wird erfindungsgemäß dadurch gelöst, daß entsprechend der Gliederung eines Prozeßablaufes und/oder der Reaktionsstufen die erforderlichen Apparate, Instrumente und Bauteile der Anlage zur modularen Prozeßführung in modularen Einheiten bausteinartig räumlich zusammengefaßt sind, denen jeweils eine räumlich benachbarte Steuerungseinheit zugeordnet ist, die einerseits mit den Aktuatoren und Sensoren der jeweiligen körperlich und funktionsmäßig modularen Einheit und andererseits jeweils über eine Datenleitung mit dem Prozeßleitsystem verbunden ist, und daß wenigstens eine der modularen Einheiten durch Zusammenfassen diverser Leitungen mit nur wenigen Schnittstellen schnell lösbar sowie als Baugruppe leicht transportabel ausgebildet ist.

Die erfindungsgemäße Fabrikationsanlage gestattet es, die Umrüstzeiten auf ca. eine Woche, einen Tag oder sogar noch kürzer zu verringern. Die modularen Einheiten bestehen einerseits aus fixen Modulen in Gestalt feststehend installierter Bahälter mit der zugehörigen Instrumentierung und andererseits aus mobilen Modulen, deren Apparate und Instrumente in staplergängige Gestelle montiert sind. Abhängig von der Komplexität der Verfahren, d.h. der Anzahl der Reaktionsstufen und der Art der Reaktionsführung werden beispielsweise vier bis acht mobile Module benötigt. Dabei ist es möglich, während einer laufenden Fabrikation oder Pilotierung andere Module für ein nächstes Verfahren vorzubereiten, weshalb die gesamte Fabrikationsanlage auch mehrere mobile Module umfassen kann, die auf Vorrat bereitgehalten werden. Um die Umrüstzeiten so gering wie möglich zu halten, werden die einzelnen Module bereits während eines noch laufenden Prozesses montiert, geeicht und getestet. Hierdurch ergibt sich zwar eine Erweiterung des insgesamt benötigten Bestandes an Meß-, Steuerungs- und Regelungs-Instrumenten sowie Reaktoren und Pumpen, jedoch wird dieser Nachteil durch die erhebliche Kürzung der Umrüstzeiten mehr als kompensiert.

Die MSR-Signale (Meß-, Steuerungs- und Regelungstechnik) der fixen Module sind gemäß einem Ausführungsbeispiel der Erfindung direkt und fix am Prozeßleitsystem installiert. Die MSR-Signale der einzelnen mobilen Module werden in der jeweils zugeordneten Steuerungseinheit bzw. einem Steuermodul digitalisiert, das auf dem die chemischen Apparate enthaltenden Modul aufgesetzt ist. Beispielsweise werden die vom Steuermodul, bzw. von der Steuerungseinheit seriell gewandelten Signale über eine Zweidrahtleitung oder eine Lichtleiterverbindung dem Prozeßrechner des Prozeßleitsystems zugeführt.

Von besonderer Bedeutung ist es, daß jedes Steuermodul einen programmierbaren Modulnummer-Code erhält, mit dem sich jedes Modul beim Prozeßleitsystem selbst identifiziert. Bei der Montage der Module werden die Art und Anzahl der im Modul enthaltenen Apparate, Instrumente und Geräte von einer Parameterisierungsstelle aus im Prozeßleitsystem abgespeichert. Beim Anfahren der Anlage werden die der jeweiligen Modulnummer zugehörenden Parameter, Rezepte, Programme etc. eingelesen, so daß die Anlage dementsprechend gesteuert werden kann.

Zweckmäßige Ausgestaltungen und Weiterbildungen der Erfindung sind in den Unteransprüchen gekennzeichnet.

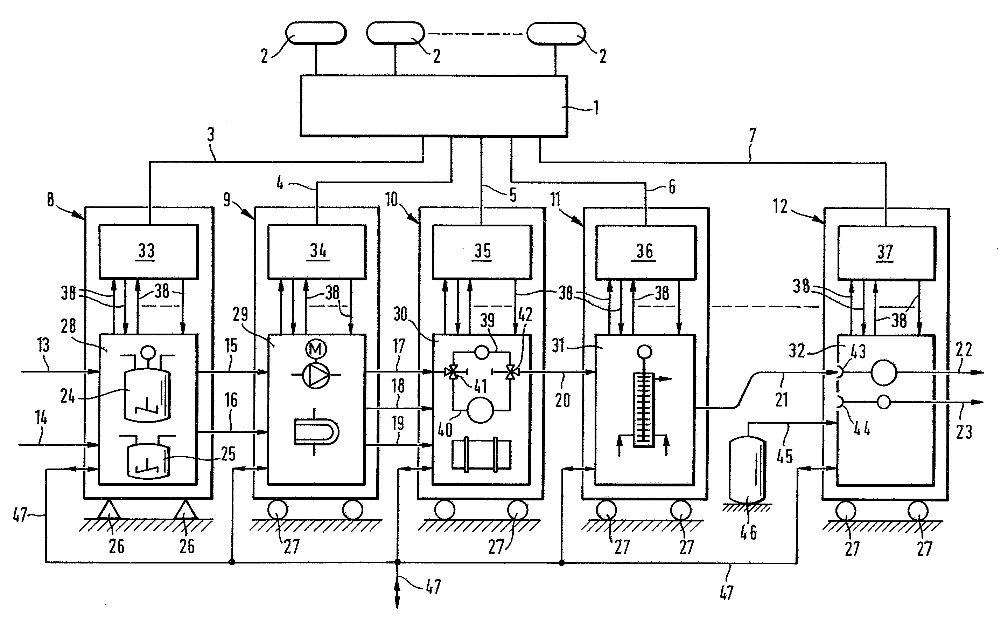

Nachfolgend wird die Erfindung anhand eines Ausführungsbeispiels näher erläutert, das in der Zeichnung dargestellt ist, die in einer einzigen Figur schematisch den Aufbau einer erfindungsgemäßen Fabrikationsanlage zeigt.

Die in der Zeichnung dargestellte Fabrikationsanlage verfügt über ein Prozeßleitsystem 1, an das zur Bedienung der Anlage während der Vorbereitung einer Produktion und während der Produktion selbst mehrere Konsolen 2 angeschlossen sind. Diese Konsolen gestatten die Eingabe und Ausgabe von Daten, die zur Prozeßfüh rung, zur Steuerung, zur Parameterisierung und zum Testen benötigt werden.

Das Prozeßleitsystem 1 ist über bidirektionale Datenleitungen 3, 4, 5, 6 und 7, die zum Beispiel als Zweidrahtleitungen oder als Lichtwellenleiter ausgebildet sein können, mit mehreren dem Prozeßleitsystem zugeordneten Modulen 8 bis 12 verbunden. Die Module 8 bis 12 enthalten jeweils zu Gruppen zusammengefaßt, alle Apparate, Geräte, Instrumente und Bauteile, die zur Herstellung des jeweils gewünschten Produktes benötigt werden.

Die zur Herstellung des jeweiligen Produktes benötigten Rohstoffe oder Komponenten werden der modular zusammengesetzten Fabrikationsanlage über Zufuhrleitungen 13 und 14 zugeführt. Die am Ausgang des Moduls 8 zur Verfügung stehenden Stoffe gelangen über Leitungen 15 und 16 zu dem zweiten Modul 9, in dem eine der Prozeßstufen zur Herstellung des gewünschten Produktes oder Eduktes abläuft.

Das zweite Modul 9 ist über Leitungen 17 bis 19 mit dem dritten Modul 10 verbunden, das über eine Leitung 20 an das Modul 11 angeschlossen ist, das seinerseits über eine Leitung 21 das letzte Modul 12 der Serie von Modulen speist. Das Modul 12 verfügt über Ausgangsleitungen 22, 23, an denen das durch die verschiedenen Prozeßstufen erzeugte Produkt oder Edukt zur Verfügung steht.

Je nach dem welche Prozeßstufen in einem der Module 8 bis 12 durchgeführt werden, sind die Module als fixe Module, wie das Modul 8, oder als mobile Module, wie die Module 9 bis 12, ausgebildet. Bei einem örtlich fixen Modul, wie dem Modul 8, handelt es sich beispielsweise um fix installierte Behälter 24, 25, die mit ihrer zugehörigen Instrumentierung eine Einheit bilden. In der Zeichnung ist die örtliche Fixierung durch Füße 26 symbolisch veranschaulicht.

Bei den Modulen 9 bis 12 handelt es sich um mobile Einheiten, deren Apparate und Instrumente in staplergängige Gestelle montiert sind. Die Mobilität der Module 9 bis 12 ist in der Zeichnung durch Laufrollen 27 symbolisch dargestellt.

Die Module 9 bis 12 enthalten die jeweils erforderlichen und in der Zeichnung beispielsweise symbolisch dargestellten Apparate, Instrument und Geräte, insbesondere Pumpen, Regelstrecken, Ventile, Umschaltventile, Dosierventile, Kühler, Vorkühler, Viboreaktoren, Rohreaktoren, Mehrkammerreaktoren, Durchflußreaktoren usw. Der Fachmann erkennt, daß die apparative Vielfalt sehr umfangreich ist und daß aus diesem Grunde zahlreiche unterschiedlich aufgebaute Einheiten oder Module möglich sind.

Wie man in der Zeichnung weiter erkennt, umfassen die Module 8 bis 12 nicht nur Chemiemodule 28 bis 32, sondern auch Steuermodule 33 bis 37. Die Steuermodule 33 bis 37 bilden Steuerungseinheiten, die mit den jeweils in den Chemiemodulen 28 bis 32 vorhandenen Apparaten, Sensoren und Aktuatoren über elektrische Leitungen 38 verbunden sind. Auf diese Weise kann je nach Wunsch mehr oder weniger Intelligenz zur Prozeßsteuerung in den Steuermodulen 33 bis 37 untergebracht werden. Im allereinfachsten Fall, was bei fixen Modulen sinnvoll sein kann, sind die Leitungen 38 direkt und fix mit dem Prozeßleitsystem 1 verbunden. Andererseits ist es auch möglich, ein Steuermodul, beispielsweise das Steuermodul 33 und/oder das Steuermodul 34 als Feldmultiplexer auszugestalten, wobei die Intelligenz zur Prozeßführung ganz beim Prozeßleitsystem 1 liegt.

Bei den Steuermodulen 35 bis 37 des beschriebenen Ausführungsbeispiels handelt es sich um Steuerungseinheiten mit eigener Intelligenz, die über eine Vielzahl von elektrischen Leitungen 38 Informationen mit den Sensoren und Aktuatoren der Chemiemodule 30 bis 32 austauschen und die anfallenden Informationen mehr oder weniger selbständig verarbeiten. Dabei ergibt sich eine Reduzierung der Datenmengen, die über die Datenleitungen 3 bis 7 ausgetauscht werden müssen und eine Entlastung des Prozeßleitsystems 1.

Welche der Chemiemodule 28 bis 32 als fixe Module und welche in staplergängigen Gestellen als mobile Module montiert werden, hängt von der Art der Apparate und jeweils benötigten Instrumente ab. Entsprechendes ergibt sich für die Steuermodule 33 bis 37. Bei einer Umrüstung der Fabrikationsanlage kann es je nach dem Umfang der erforderlichen Umrüstung ausreichen, die Fabrikationsanlage unverändert zu lassen und lediglich die Steuerung durch die Steuermodule und das Prozeßleitsystem umzustellen. Wenn dies zur Umstellung eines Prozesses nicht ausreicht, kann es erforderlich sein, einzelne Module umzubauen. Wenn ein solcher Umbau verhältnismäßig aufwendig wird, gestattet es der modulare Aufbau der Fabrikationsanlage, ein mobiles Modul, beispielsweise das Modul 11, insgesamt gegen ein anderes Modul auszutauschen, das während einer Vorbereitungsphase getestet und parametrisiert worden ist, um u.a. Regelwerte, Druckbereiche, Temperaturbereiche sowie die Bedeutung der elektrischen Leitungen 38 festzulegen. Auf diese Weise gestattet es der modulare Aufbau, eine hohe Flexibilität zu erreichen, ohne jeweils gezwungen zu sein, in den Aufbau der Fabrikationsanlage durch einen einzelnen Umbau jeweils direkt einzugreifen. Selbstverständlich ist es bei geringfügigen Änderungen im Einzelfall nicht zweckmäßig, ein mobiles Modul gegen ein anderes auszutauschen, wenn ein bereits in der Anlage vorhandenes mobiles Modul schneller der neuen Prozeßführung angepaßt werden kann.

Die Umrüstung und die Tests der einzelnen Module 8 bis 12 erfolgen zweckmäßigerweise in der Vorbereitungsphase während noch eine Fabrikation oder Pilotierung läuft. Auf diese Weise ergibt sich insbesondere ein Pilotierungs-Umrüstzeitgewinn.

Der verschiedenartigsten Verfahren wegen, welche die Anlagenauslegung bewältigen muß, ergibt sich eine Vielfalt von zum Teil parallel zu dimensionierenden Apparaten. Dieselben lassen sich verschieden in Modulen kombinieren. Eine Möglichkeit besteht darin, eine Parallelführung und eine Umschaltung vorzusehen, wie sie im oberen Teil des Chemiemoduls 30 veranschaulicht ist. Man erkennt dort einen ersten Zweig 39 und einen zweiten Zweig 40, die mit Hilfe von Umschaltventilen 41, 42 umschaltbar sind. Die Zweige 39 und 40 unterscheiden sich dabei beispielsweise durch unterschiedliche Pumpen, Regelstrecken, Reaktoren usw. Die erwähnte Parallelführung gestattet eine schnelle Umschaltung mit Hilfe der Umschaltventile 41, 42, ohne daß extern mechanische Arbeiten vorgenommen werden zu brauchen. Sensoren gestatten dabei zusammen mit dem Steuermodul 35 eine Überwachung des jeweils eingestellten Weges durch den ersten Zweig 39 oder den zweiten Zweig 40. Eine solche Auslegung innerhalb des Chemiemoduls 30 führt somit zu einem größeren Aufwand bezüglich der Meß-, Steuer- und Regelungstechnik.

Eine andere Möglichkeit besteht in dem bereits erwähnten Auswechseln eines Moduls, beispielsweise des Moduls 11 durch ein anderes Modul. Hierdurch ergibt sich beim Umrüsten mehr Arbeit und nach dem Umrüsten berücksichtigt die Steuerung der Fabrikationsanlage den andersartigen Aufbau des zum Austausch eingesetzten Moduls.

Das Modul 12 gestattet es, die Leitung 21 wahlweise an den Eingang 43 oder den Eingang 44 anzuschließen. Durch eine Umhängung der Anschlüsse kann somit ebenfalls unter Mehraufwand für die Meß-, Steuerungs- und Regelungstechnik eine Umrüstung der Fabrikationsanlage erfolgen. Dabei überwacht das Steuermodul 37 über an den Eingängen 43 und 44 angeordnete Sensoren, ob die Leitung 21 mit dem vorgesehenen Anschluß am Eingang 43 bzw. 44 verbunden ist.

Wie man in der Zeichnung erkennt, verfügt das Chemiemodul 32 über eine Zufuhrleitung 45, die mit einem als fixes Modul auffassbaren Behälter 46 verbunden ist, der eine Instrumentierung aufweisen kann, die direkt und fix am Prozeßleitsystem 1 angeschlossen ist.

Um bei dem oben erwähnten Modulwechsel nicht großen Starkstrominstallationsaufwand treiben zu müssen, ist bei den Modulen 8 bis 12 vorgesehen, die Elektro-Verteilung im Steuermodul zu bewerkstelligen. Somit wird nur eine einzige elektrische Einspeisung pro Modul 8 bis 12 benötigt. Die Steuermodule 33 bis 37 dienen somit im einzelnen Fall nicht nur ausschließlich dazu, die MSR-Signale über eine Multiplexeinheit zusammenzufassen und dem Rechner des Prozeßleitsystems 1 gegebenenfalls über Lichtwellenleiter, die eventuell im Starkstromkabel untergebracht sind, zuzuführen.

Die Module 8 bis 12 verfügen nicht nur jeweils über eine einzige Einspeisung für die elektrische Energie, sondern auch jeweils über eine einzige Einspeisung pro Modul für Druckluft und Kühlwasser o.dgl., was in der Zeichnung durch die Leitungen 47 veranschaulicht ist.

Die Steuermodule 33 bis 37 gestatten eine Selbstidentifikation der Module 8 bis 12, so daß eine flexible Einheit mit einem Minimum an Installationsfehlermöglichkeiten und großer Betriebssicherheit der Umrüstungen erhalten wird. Neuerstellte Module werden zunächst an eine Testapparatur angeschlossen, wobei ein Testprogramm für das jeweils zu testende Modul unter einer entsprechenden Bedienung abgearbeitet wird. Im Rahmen der Vorbereitung erfolgen Selbsttests und Tests, ob alle Parameter entsprechend dem vorgesehenen Verfahrensablauf vorhanden sind. Dabei kann in den Steuermodulen oder im Prozeßleitsystem für unterschiedliche Verfahren jeweils unter einer unterschiedlichen Verfahrensnummer gespeichert werden, wie das jeweils vorhandene Chemiemodul 28 bis 32 aufgebaut ist und wie und mit welchen Parametern der Prozeß durchzuführen ist. Nach dem Umrüsten der Anlage und Einfügen der neu erstellten Module erfolgt die Bedienung und Überwachung der Anlage über die Konsolen 2, wobei die Information bezüglich der Einzelheiten des Verfahrens teilweise im Prozeßleitsystem 1 und teilweise in den Steuermodulen 33 bis 37 vorliegt. Für unterschiedliche Verfahren nach dem jeweiligen Umrüsten sind jeweils unterschiedliche Module vorgesehen, wobei die mit programmierbaren Modulnummer-Codes zur Selbstidentifizierung versehenen Steuermodule zur Erhöhung der Betriebssicherheit genaue Rückmeldungen abgeben können, so daß das Prozeßleitsystem 1 überprüfen kann, ob für ein bestimmtes Verfahren mit einer bestimmten vorgegebenen Verfahrensnummer die erforderlichen Module tatsächlich physikalisch vorhanden sind und ob die Konfiguration der Module, wie für das jeweilige Verfahren vorgesehen, bei der Vorbereitung vorgenommen wurde.

Die Daten-Verbindung zwischen den modularen Einheiten und dem Prozessleitsystem braucht nicht unbedingt über eigene, körperliche Datenleitungen zu erfolgen. Es können dazu auch drahtlose Kommunikationstechniken vorgesehen sein oder die Dateninformation wird durch ein geeignetes Modulationsverfahren über die Energieversorgungsleitungen übertragen.

**Patentansprüche**

1. Fabrikationsanlage zur Herstellung eines Produktes, insbesondere eines chemischen Produktes oder eines Eduktes, mit einem Ein/Ausgabe-Konsolen und Prozeßrechner aufweisenden Prozeßleitsystem, durch das die in den einzelnen Produktionsapparaturen und Geräten der Fabrikationsanlage ablaufenden Prozeßstufen zur Produktion eines Produktes aus den eingespeisten Rohstoffen mit Hilfe von Sensoren und Aktuatoren überwachbar und steuerbar sind, **dadurch gekennzeichnet, daß** entsprechend der Gliederung eines Prozeßablaufes und/oder der Reaktionsstufen die erforderlichen Apparate, Instrumente und Bauteile der Anlage zur modularen Prozeßführung in modularen Einheiten (28 bis 32) bausteinartig räumlich zusammengefaßt sind, denen jeweils eine räumlich benachbarte Steuerungseinheit (33 bis 37) zugeordnet ist, die einerseits mit den Aktuatoren und Sensoren der jeweiligen körperlich und funktionsmäßig modularen Einheit (28 bis 32) und andererseits jeweils über eine Datenleitung (3 bis 7) mit dem Prozeßleitsystem (1) verbunden ist, und das wenigstens eine der modularen Einheiten (28 bis 32) durch Zusammenfassen diverser Leitungen (47) mit wenigen Schnittstellen (13 bis 21, 43, 44, 45) schnell lösbar sowie als leicht transportable Baugruppe (9 bis 12) ausgebildet ist.

2. Fabrikationsanlage nach Anspruch 1, **dadurch gekennzeichnet, daß** die modularen Einheiten als fixe Module (8, 38, 46) in Gestalt feststehend installierter Behälter (24, 25, 46) mit der zugehörigen Instrumentierung ausgebildet sind.

3. Fabrikationsanlage nach Anspruch 1, **dadurch gekennzeichnet, daß** die modularen Einheiten als mobile Module (9 bis 12) mit Laufrollen (27) ausgebildet sind.

4. Fabrikationsanlage nach Anspruch 3, **dadurch gekennzeichnet, daß** die mobilen Module (9 bis 12) staplergängige Gestelle aufweisen.

5. Fabrikationsanlage nach einem der vorstehenden Ansprüche, **dadurch gekennzeichnet,** daß jedes Modul (8 bis 12) einen für alle Bauteile gemeinsamen Anschluß für das Einspeisen der jeweils benötigten Hilfsenergie, wie Starkstrom, Druckluft, Kühlwasser o.dgl. aufweist.

6. Fabrikationsanlage nach einem der vorstehenden Ansprüche, **dadurch gekennzeichnet,** daß die Datenleitungen (3 bis 7) zwischen dem Prozeßleitsystem (1) und Steuerungseinheiten (33 bis 37) der Module (8 bis 12) Lichtwellenleiter sind, durch die seriell gewandelte Signale dem Prozeßrechner zuführbar sind.

7. Fabrikationsanlage nach einem der Ansprüche 2 bis 6, **dadurch gekennzeichnet,** daß die Module (8 bis 12) als Synthesemodule, Vorkühlermodule, Kühlmodule, Dosiermodule, Entgasungsmodule, Reaktormodule, Vorlagenmodule o.dgl. ausgebildet sind.

8. Fabrikationsanlage nach einem der vorstehenden Ansprüche, **dadurch gekennzeichnet,** daß die Module (8 bis 12) jeweils eine Instrumentierung aus Meß-, Steuerungs- und Regelungsinstru menten sowie Reaktoren, Pumpen, Dosierventile, Behälter, Kühler o.dgl. Bauelemente enthalten.

9. Fabrikationsanlage nach Anspruch 2, **dadurch gekennzeichnet,** daß die Signalleitungen (38) der fixen Module (28, 46) direkt und dauerhaft mit dem Prozeßleitsystem (1) verbunden sind.

10. Fabrikationsanlage nach Anspruch 1, **dadurch gekennzeichnet,** daß jedes Steuermodul (33 bis 37) zur Identifizierung der modularen Einheit (8 bis 12) einen Speicher für einen programmierbaren Modulnummer-Code aufweist.

11. Fabrikationsanlage nach einem der vorstehenden Ansprüche, **dadurch gekennzeichnet,** daß das Prozeßleitsystem (1) oder die Steuermodule (33 bis 37) einen Speicherbereich aufweisen, in den bei der Montage der modularen Einheiten (8 bis 12) die Art und Anzahl der in den Modulen (28 bis 32) enthaltenen Instrumente, Sensoren, Aktuatoren o.dgl. über eine Parametrisierungsstelle abspeicherbar ist.

12. Fabrikationsanlage nach Anspruch 3 oder 4, **dadurch gekkennzeichnet,** daß die Steuerungseinheiten (34 bis 37) jeweils in einem Gehäuse untergebracht sind, das auf einem Gestell eines mobilen oder fixen Moduls (9 bis 12, 8, 38, 46) befestigt ist.

13. Fabrikationsanlage nach einem der vorstehenden Ansprüche, **dadurch gekennzeichnet,** daß die Steuerungseinheit (33) eines fixen Moduls (8) getrennt von diesem aufgestellt ist und daß die Meß-, Steuerungs- und Regelungs-Signale der fixen Module (8, 46) direkt und dauerhaft mit dem Prozeßleitsystem (1) verbunden sind.

14. Fabrikationsanlage nach einem der vorstehenden Ansprüche, **dadurch gekennzeichnet,** daß die Steuerungseinheiten (33 bis 37) Vorrichtungen zum Digitalisieren der Meß-, Steuer- und Regelsignale aufweisen.

15. Fabrikationsanlage nach einem der vorstehenden Ansprüche, **dadurch gekennzeichnet,** daß die Steuerungseinheiten (33 bis 37) als Feldmultiplexer oder als z.B. speicherprogrammierbare Steuerung ausgebildet sind.

16. Fabrikationsanlage nach einem der vorstehenden Ansprüche, **dadurch gekennzeichnet,** daß die Steuerungseinheiten (33 bis 37) Prozeßrechner zur Führung der in einem mobilen Modul (9 bis 12) ablaufenden Prozesse enthalten.

17. Fabrikationsanlage nach einem der vorstehenden Ansprüche, dadurch gekennzeichnet, dass zwischen dem Prozessleitsystem und den Steuerungseinheiten der Module eine drahtlose Datenverbindung besteht.

18. Fabrikationsanlage nach einem der vorstehenden Ansprüche, dadurch gekennzeichnet, dass Daten zwischen Prozessleitsystem und Steuerungseinheiten der Module über Energieleitungen übertragen werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-2 082 347  (PELLERIN MILNOR CORP.)<br>* Seite 1, Zeile 84 - Seite 2, Zeile 34; Figuren 1,2 *<br>--- | 1-18 | G 05 B  15/02 |
| A | GB-A-2 127 586  (M.A.N. MASCHINENFABRIK)<br>* Seite 1, Zeilen 57-81; Figur 1 *<br>--- | 1-18 | |
| A | REGELUNGSTECHNISCHE PRAXIS, Band 26, Nr. 5, Mai 1984, Seiten 226-231; B.I. BROST: "Prozessführungssystem TDC 3000"<br>* Seiten 227-229 *<br>--- | 1-18 | |
| A | REGELUNGSTECHNISCHE PRAXIS, Band 26, Nr. 11, November 1984, Seiten 513-517; W. MÜLLER: "Procontrol I, ein dezentrales Industrieleitsystem"<br>* Seite 513, Zeilen 30-60; Figur 2 *<br>----- | 1-18 | |

**RECHERCHIERTE SACHGEBIETE (Int. Cl.4)**

G 05 B

Der vorliegende Recherchenbericht wurde für alle Patentansprüche erstellt

| Recherchenort | Abschlußdatum der Recherche | Prüfer |
|---|---|---|
| DEN HAAG | 03-11-1988 | MOYLE J.F. |